# EUROPEAN PATENT APPLICATION

(11) **EP 2 908 274 A1**
(43) Date of publication of application: **19.08.2015**
(21) Application number: 14154830.5
(22) Date of filing: 12.02.2014
(51) Int. Cl.: G06Q 10/08, G07F 17/12, G06Q 30/02

(54) **Method and system for performing a promotion campaign**

(71) Applicant: Integer.pl S.A., 30-624 Krakow (PL)
(72) Inventor: Gruca, Krzysztof, 30-611 Kraków (PL)
(74) Representative: Kilchert, Jochen

(57) **Abstract**

Method for performing a promotion campaign, comprising the steps:
a) authenticating a courier by means of a parcel machine (20, 20');
b) receiving a selection from the courier, the selection selecting a target promotion campaign out of a list of promotion campaigns;
c) determining a set of reserved compartments (30) associated with the target promotion campaign;
d) determining a set of vacant compartments (30) of the parcel machine (20, 20');
e) matching the set of vacant compartments with the set of reserved compartments to determine a set of target compartments;
f) opening and/or unlocking the set of target compartments (30) of the parcel machine (20, 20') for loading items;
g) receiving data indicating that at least one of the target compartments (30) have been loaded;
h) storing association data, the association data associating the at least one of the target compartment (30) with the target campaign.

## Description

The present invention relates to a method and a system for performing a promotion campaign.

Parcel machines for sending and receiving parcels are known. Such parcel machines comprise a plurality of compartments for loading and unloading parcels. A terminal with an input and an output device allows user interaction.

A user of such a parcel machine usually provides the parcel with a label containing the address of the receiver of the respective parcel. Afterwards, the shipping of this parcel is registered with the machine and the user deposits the parcel in a parcel machine. Couriers visit the parcel machines at regular intervals to pick up certain parcels and to deliver these parcels to a different parcel machine and/or a central distribution station.

During a promotion campaign, a user/company might want to deliver a plurality of similar or identical items to a plurality of customers. Performing such a promotion campaign with conventional parcel machines or parcel delivery systems is a time consuming task. Unnecessary and potentially unavailable data, e.g. the final address of the receiver of the items, have to be identified and entered. Furthermore, it is required that all of the items are packed in a manner such that they can be transported in the usual manner, e.g. together with a plurality of regular parcels.

It is very difficult to keep track of available compartments for placing respective items of a promotion campaign such that the respective parcel machine is used in an efficient manner. Further, when sending promotion messages, the promotion items need to be available for pick-up. Timing is, thus, very important.

Furthermore, certain promotion campaigns might be limited to a certain timeframe, e.g. the next three days. Accordingly, there is a need to determine which promotion campaigns are active and inactive and to collect items of inactive promotion campaigns stored in parcel machines. Obviously, these items use up space that could be used for different (active) promotion campaigns or regular postal services.

In DE 10 301 137 A1 a normal method for sending and receiving parcels is described.

Starting from this prior art it is the objective problem of the present invention to provide a method for performing a promotion campaign. Furthermore, a tangible implementation and system for such a method should be provided.

The problem is solved by a method for performing a promotion campaign, comprising the steps of:
a) authenticating a courier by means of a parcel machine;
b) receiving a selection from the courier, the selection selecting a target promotion campaign out of a list of promotion campaigns;
c) determining a set of reserved compartments associated with the target promotion campaign;
d) determining a set of vacant compartments of the parcel machine;
e) matching the set of vacant compartments with the set of reserved compartments to determine a set of target compartments;
f) opening and/or unlocking the set of target compartments of the parcel machine for loading items;
g) receiving data indicating that at least one of the target compartments have been loaded;
h) storing association data associating the at least one of the target compartment with the target campaign.

One aspect of the present invention is that the one or more parcel machines store a relationship between compartments and campaigns. Accordingly, it is not necessary that each of the items stored/deposited within a compartment/target compartment comprise a label indicating the receiver and/or the sender of the respective item. Indeed, with the inventive method it is possible that the receiver of the item stored in the compartment is determined after the respective item is placed in the compartment. Furthermore, the inventive method provides the ability of reserving compartments for a particular promotion campaign. Thus, the service provider can ensure that a certain number of compartments are available at a particular parcel machine or distributed over a plurality of parcel machines. This enables the courier to deposit a plurality of, e.g. more than 10, more than 20 and/or more than 50, items at once. Thus, the process of loading a particular parcel machine with the items of a promotion campaign can be handled more efficiently. Furthermore, it might not be necessary to pack the item in boxes since they could be delivered by a courier handling only this promotion.

In one embodiment, the method comprises the steps of:
- receiving, by a/the parcel machine, a reservation request from a server,
- reserving a number of compartments in accordance with the reservation request by at least storing the number of reserved and/or not reserved compartments per parcel machine.

Accordingly, the parcel machines are adapted to receive reservation requests from a central authority, e.g. the server. These reservation requests can be stored locally on the parcel machines. In one embodiment of the invention, each parcel machine stores at least the number of reserved and/or not reserved compartments. Accordingly, it is possible to maintain the usual data structure indicating whether a particular compartment is vacant or not. The concept of having reserved compartments can be layered on top of this general concept. Thus, an occupied - not vacant - compartment could be reserved and loaded or reserved and not loaded.

In one embodiment of the present invention, the reservation request comprises an indication of a particular promotion campaign. Such an indication could be an identifier associated with the particular promotion campaign. In this situation, the step of reserving a number of compartments might comprise storing the number of reserved compartments and association data associating the number of reserved compartments to the particular campaign.

In one embodiment, there might a table indicating that a particular compartment is reserved and for which promotion campaign this reservation has been made. In another embodiment, the parcel machine might implement a more generic approach wherein the parcel machine ensures that there is a sufficient number of compartments reserved, whereby the compartment dedicated to a particular campaign is determined at run time, e.g. when the respective compartment is loaded. In this embodiment, the parcel machine might store a plurality of numbers indicating a reservation for a plurality of promotion campaigns.

In one embodiment, the method might comprise:
- receiving, by a parcel machine status data from a server, the status data indicating that a particular campaign has been deactivated;
- identifying of the number of reserved compartments (30) associated with the particular campaign by the association data;
- freeing the number of reserved compartments (30), preferably by setting the status of the reserved compartments (30) from occupied to free.

Promotion campaigns might have the status of being active and inactive.

In one embodiment, a particular campaign might be valid only for a predefined time interval, e.g. three days. After this time interval has lapsed, the parcel machine and/or a central authority, e.g. the server might set this campaign to an inactive status (deactivate the campaign). Also, it is possible that an active campaign can be set to an inactive status manually, e.g. by the entity paying for the campaign. This entity / customer of the promotion campaign service might want to set an active promotion campaign to an inactive status such that the respective campaign is terminated.

The inventive method provides means such that under these circumstances, reserved compartments are freed such that they can be used for other campaigns and/or for the regular mail service. Depending on the tangible implementation, the method might simply determine the number of reserved compartments associated with the particular inactive campaign and then increase the number of available compartments by this number. In a different implementation, the inventive method might iterate over all of the reserved compartments and determine per compartment whether the respective compartment can be freed.

The parcel machine might comprise a plurality of compartments of different types. For example, a particular parcel machine might have compartments of two different types and/or of three different types. The compartments might, for example differ in size and/or dimension. In one embodiment of the invention, reservations can be made for a particular type of compartment. Accordingly, the parcel machines will maintain data structures for storing per reservation:
- the number of reserved compartments of a particular type;
- association data associating the number with a particular campaign.

Furthermore, the parcel machines might store an order indicating that certain types of compartments can be substituted by other types of compartments. For example, the second type might indicate that a certain compartment is of a medium size and the third type that the compartment is of a large size. Thus, if a reservation for a certain amount of compartments of the second type is received and there are not enough compartments available to satisfy the reservation requirements, the parcel machine might decide to reserve a certain amount of bigger compartments (third type) such that the reservation can be placed.

In a further embodiment, the method might implement a reallocation process if compartments of the required type, e.g. second type, become available. In this situation, the method might free reservations for the third type and allocate compartments of the second type instead. Accordingly, the available compartments of a particular parcel machine are used most efficiently and flexible. Accordingly, there is only a very low chance that certain reservation requests cannot be placed.

The inventive method might implement a method step of sending a request for status data. Preferably, this request originates from one or more parcel machines. Preferably, these requests will be issued after the authentication of the courier. Thus, the parcel machine will become aware of inactive campaigns without having to maintain an online connection to the server. As already discussed, the compartments that are reserved for an inactive campaign can be freed.

Under certain circumstances, the compartments that need to be freed can be loaded with items of the inactive promotion campaign. Accordingly, the inventive method might comprise the steps of:
- identifying a set of loaded compartments containing items associated with the campaign that have been deactivated;
- opening and/or unlocking the loaded compartments after authenticating the courier.

Thus, the courier can collect the respective items such that the respective compartment can be free. In an alternative embodiment, the parcel machine might mark certain compartments as compartments from which items need to be collected by the courier. Thus, it might not be necessary to issue a request for the status data after or during the process of authenticating a certain courier. At this stage, the parcel machine might already know which compartments need to emptied.

In one embodiment, the method might comprise the following steps:
- sending a plurality of (digital) promotion messages containing an campaign identifier identifying a promotion campaign;
- receiving a plurality of registration requests, e.g. via a web server, the registration requests comprising at least one campaign identifier and a sender address;
- determining at least one compartment and/or parcel machine storing an item associated with the campaign identifier;
- sending an information message containing location data indicating the location of the compartment/parcel machine to the sender.

Accordingly, the inventive method might automatically inform a plurality of users about certain promotion campaigns. In response to this information, users might decide to register with the campaign, e.g. to receive a gift or a particular service. During this registration process, campaign identifiers and/or sender addresses can be provided by the user. Thus, the server and/or the parcel machine can determine at run time where a user will be able to collect the item of the particular promotion campaign. The user can be informed about this location by a message that is sent to a user. Preferably, the respective messages are emails or text messages. However, the location data can also be contained in a web page accessed by the user/sender. This dynamic process of assigning certain items/compartments to a particular user will greatly improve the efficiency of their promotion campaign. Otherwise, it would be necessary to maintain for each potential user an item of the promotion campaign. Accordingly, for each user there would be the necessity to block a particular compartment. Whenever the system or parcel machine determines that a potential user will not participate in a certain campaign the respective assignment would require a change/update. Thus, the inventive method provides an efficient and resource saving implementation.

The method might be characterized in that the registration request comprises location data indicating a location, e.g. home address, company address and/or current location associated with the sender. The method might comprise matching the location data of the sender with the location data of a plurality of parcel machines to determine at least one compartment and/or parcel machine storing the item associated with the campaign identifier.

The method might comprise:
- generating a pin code;
- storing the pin code in a pin code table of any other table for valid pin codes;
- assigning the pin code to a promotion campaign and/or a (target) compartment;
- sending a (digital) message containing the pin code;
- receiving via a terminal a user input;
- comparing the user input with the pin code table to determine whether the user input is a valid pin code;
- opening and/or unlocking a compartment with an item associated with a promotion campaign, wherein the compartment is the compartment to which the pin code is assigned and/or the promotion campaign is the promotion campaign the pin code is assigned to.

Accordingly, the user can be provided with a pin code which will allow access to a particular compartment and/or a particular item of a particular promotion campaign.

Preferably the pin code is generated in response to the association of a particular user.

The given problem is also solved by a computer readable device with instructions adapted to cause a computer to implement the previously described method.

Furthermore, the problem is solved by a system adapted to implement the described method or at least part of the respective functionality. Preferably, the system comprises at least one server and a plurality of parcel machines communicatively connected to the server. In one embodiment, the parcel machines comprise:
- an authentication device for authenticating the courier;
- an input device;
- a plurality of compartments with actuators for locking and unlocking the compartments; and
- a processing device for implementing the given method.

The authentication device can be a separate identification device, e.g. a card reader or a USB port for connecting a USB stick with a particular key. Alternatively, the input device and/or output device can be used to authenticate a courier.

The system has similar advantages as those described in combination with the method.

In one embodiment, the plurality of parcel machines each comprise a promotion table storing a plurality of promotion campaigns and a campaign status associated with the respective promotion campaign. The campaign status preferably indicates that a promotion is active or inactive.

In a further embodiment, the plurality of parcel machines each comprise a promotion compartment table storing a plurality of compartment identifiers and a compartment status for each of the compartments, wherein the compartment status preferably indicates at least one of the following statuses:
- vacant and not reserved (e.g. status 0);
- vacant and reserved (e.g. status 1); or
- loaded with an item of a promotion campaign (e.g. status 2).

Optionally the promotion compartment table might also comprise campaign identifiers associating a particular status with a particular promotion campaign.

These and other aspects of the invention will be apparent from and elucidated with reference to the embodiments described hereinafter.

In the following drawings:
- Fig. 1 shows a system comprising an administration server, parcel machines and a customer server;
- Fig. 2 shows components of an exemplary parcel machine;
- Fig. 3 components of an exemplary administration server;
- Fig. 4 shows an activity diagram for creation of a new campaign;
- Fig. 5 shows an activity diagram for deleting a campaign;
- Fig. 6 shows an activity diagram of a promotion activity after the creation of a promotion campaign;
- Fig. 7 shows a user table indicating registered and unregistered users;
- Fig. 8 shows a promotion campaign table indicating active and inactive campaigns;
- Fig. 9 shows a promotion compartment table indicating the status of the compartments of a parcel machine.

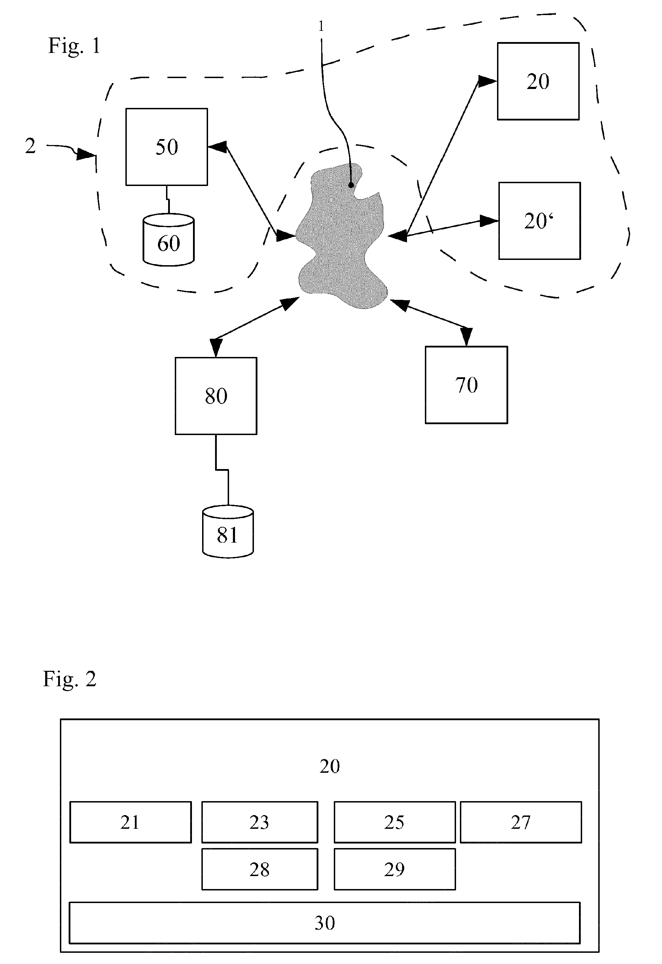

In one embodiment, a promotion system comprises an administrative server 50 and several parcel machines 20, 20'. The parcel machines 20, 20' and the administrative server 50 are communicatively linked with each other by a network. In the embodiment of Fig. 1 the network is the internet 1. Of course, the network connection between the parcel machines 20, 20' and the administrative server 50 can be any type of network connection, in particular dedicated network connections as provided by, e.g. a dial-in network.

The administrative server 50 is connected to a central database 60 storing the most important information for the administrative server 50.

Also connected to the internet 1 is a customer server 80 with a customer server database 81 and a mobile phone 70 of a user.

Fig. 2 shows several components of the parcel machine 20. Obviously, the parcel machine 20 has a plurality of compartments 30. Furthermore, the parcel machine 20 comprises an input device 21, an output device 23, e.g. a display, a processing device 25, a communication device 27, a parcel machine memory 28 and a card reader 29. The input device 21 and the output device 23 allow the parcel machine 20 to interact with a user and/or a courier. The processing device 25 implements the logic necessary for providing a promotion campaign on the parcel machine's side. The communication device 27 is adapted to communicate with the administration server 50 via the internet 1. The card reader allows authentication, for example, of the courier. The compartments 30 are equipped with actuators such that the processing device 25 can unlock and lock each of the compartments 30, thereby making these compartments 30 available for the users and/or courier. Users and couriers can load and unload items into a compartment 30 if the respective compartment 30 is unlocked.

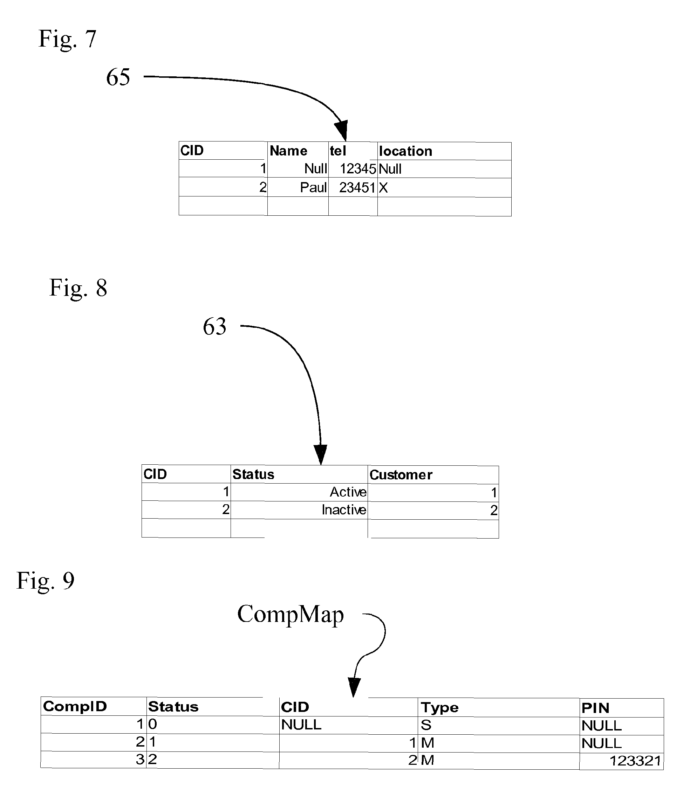

Preferably, the compartments 30 can differ in dimension and size. In the described embodiment, there are compartments 30 of small (Fig. 9, column "Type", value "S"), medium (Fig. 9, column "Type", value "M") and large ("L") size.

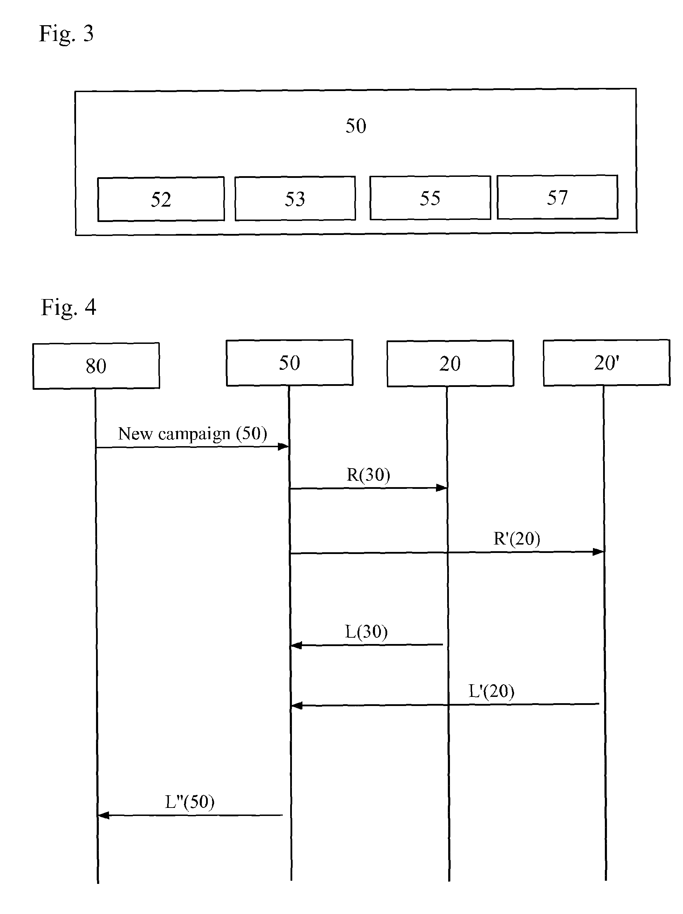

As shown in Fig. 3, the administrative server 50 has a SMS-gateway 52, a server communication device 53, a server processing unit 55 and a server memory 57. The server communication device 53 is adapted to communicate with the parcel machines 20, 20' as well as with the mobile phone 70 and/or the customer server 80.

The server processing unit 55 and the server memory 57 provide the necessary resources to implement the logic of a promotion campaign as described herein at least as far as the administrative server 50 is concerned.

Fig. 4 shows, exemplarily, the process of creating a new campaign. The creation of a new campaign might originate from a customer, e.g. the customer server 80. This server might send a request to the administrative server 50 of the inventive system to create a new campaign. In the embodiment as shown in Fig. 4, the customer server 80 requests the creation of a new campaign by issuing the command/message "New campaing (50)", whereby 50 compartments 30 should be reserved. The administrative server 50 processes this request and creates the respective promotion campaign, e.g. by storing a new entry in a promotion campaign table 63 as shown in Fig. 8. After creating the promotion campaign, the administrative server 50 distributes the request for the total amount of 50 compartments over two parcel machines, namely parcel machine 20 and parcel machine 20'. A request R(30) is sent to the parcel machine 20, whereby the administrative server 50 specifies within the request that the parcel machine 20 should provide a reservation for 30 compartments. A further request R' (20) is sent to the parcel machine 20', whereby the administrative server 50 specifies within that request that 20 compartments should be reserved. In response to these requests, the parcel machines 20, 20' reserve the respective amount of compartments, e.g. by modifying a locally stored promotion compartment table CompMap as shown in Fig. 9.

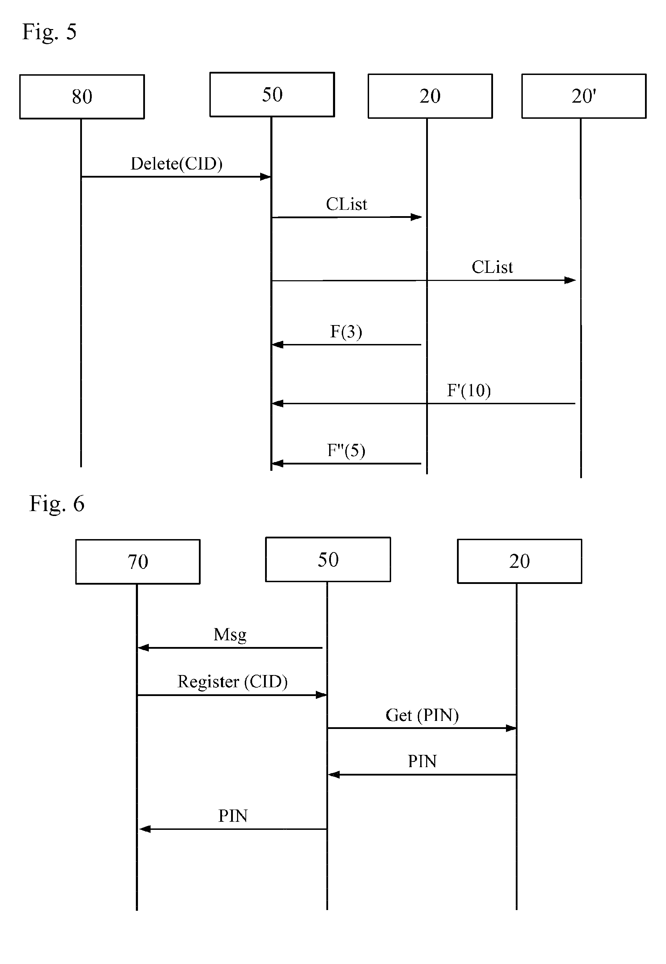

The parcel machines 20, 20' might confirm the reservations by sending respective messages. In the activity diagram of Fig. 4, the confirmation messages of the parcel machines 20, 20' are not shown. At some point in time a courier will visit the parcel machines 20, 20' and load the compartments of the parcel machines 20, 20' with items, e.g. gifts, associated with the particular promotion campaign. After the compartments 30 have been loaded with the associated items, the respective parcel machines will issue a message informing the server 50 that the respective parcel machines 20, 20' have been loaded. In the activity diagram of Fig. 4, these messages are referred to as L(30) and L'(20). The administrative server 50 will collect these messages and process the information provided therein. In one embodiment, the administrative server 50 stores the information that 50 compartments have been loaded with the items of the respective campaign. Furthermore, the administrative server 50 determines the customer associated with the respective campaign and informs the customer about the loading event, e.g. by issuing the message L"(50). Furthermore, the loading of the compartments might trigger the sending of promotion messages Msg (Fig. 6).

In the embodiment as shown in Fig. 4, the information required for creating a campaign is very limited. As discussed, only the number of compartments necessary is specified. In another embodiment, the promotion campaign might be limited to a certain timeframe. Accordingly, the customer server 80 might provide a starting time and/or a closing time. The customer server 80 will monitor the specified timeframe such that the promotion campaign is only active within the given interval. After the activation time has passed by, the administration server 50 will render the promotion campaign inactive and optionally inform the parcel machines 20, 20' about this status change.

Also, the customer server 80 might provide data descriptive of the item to be stored. In response to receiving this data the administrative server 50 might determine a particular type (e.g. small, medium or large) of compartment 30 needed for storing the respective item. As an alternative, the customer server 80 might provide a specification of the type of compartment 30 needed. In this embodiment, the administrative server 50 can pass this information onward to the parcel machines 20, 20' such that the parcel machines 20, 20' only reserve compartments matching the requirements. Furthermore, the customer server 80 might from the very beginning provide a list of addressees of the campaign. Such a list can provide a plurality of email addresses and/or mobile phone numbers. In addition, customer server 80 can provide information indicating a location of the promotion campaign. A customer of the inventive system might for example want to specify that the items for the promotion campaign are only stored in parcel machines 20, 20' which are in the vicinity of the customer. Accordingly, the administration server 50 might select a subset of parcel machines 20, 20' which may match these location requirements.

The inventive method for loading a parcel machine 20 with items can comprise the following steps. The courier receives an order that certain items need to be stored in the parcel machine 20. The courier loads his truck with the respective items and drives to the parcel machine 20. At the parcel machine 20, he authenticates himself using an authentication card that needs to be inserted in the card reader 29 of the parcel machine 20. After the authentication process, the parcel machine 20 displays a list of active promotion campaigns available on that particular parcel machine 20. Via the input device 21 the courier can select one promotion campaign from the plurality of promotion campaigns. The parcel machine 20 receives the selection and derives a promotion campaign identifier CID for that campaign. Using the promotion campaign identifier CID, the parcel machine 20 determines which of its compartments 30 are reserved for that campaign and not filled with any items. In the described embodiment, the parcel machine 20 might consult the promotion compartment table CompMap of Fig. 9 to find respective compartments. These compartments 30 are then opened in parallel or sequentially such that the courier can load items into the compartments 30. After loading the compartments 30, the courier might be required to enter an item identifier such that the parcel machine 20 can store which type of item is deposited in which compartment 30. As an alternative, for a particular promotion campaign there might be only one item available. Accordingly, the parcel machine 20 can either store a relationship between the promotion campaign and the compartment 30 or between the (standard) item of the promotion campaign and the compartment 30. This association data can either be stored locally or centrally with the administration server 50. In a preferred embodiment, respective data is stored locally and centrally.

In any case, the parcel machine 20 informs the administrative server 50 about the loading of the respective compartments 30 as can be seen in Fig. 4 (loading confirmation L(30)).

Fig. 5 shows an activity diagram for deleting a promotion campaign. The respective request can be issued via the customer server 80. Preferably, the customer server 80 provides an identifier identifying the respective promotion campaign. In the given embodiment, the identifier is the promotion campaign identifier CID. After receiving the respective request, the administrative server 50 will update the respective status of the promotion campaign. In the described embodiment, the promotion campaign table 63 will be changed such that the status is set to "inactive". A respective example is shown in the third row of the table of Fig. 8.

The administration server 50 will communicate the update to the promotion campaign table 63 via campaign list updates CList. The parcel machines 20, 20' receiving the campaign list CList update can then determine which compartments 30 can be freed. In accordance with the invention, some of the compartments that are reserved for a particular campaign can still contain items. Accordingly, it might be necessary that a courier unloads the compartment prior to freeing the reservation.

In one embodiment, the parcel machines 20, 20' will report back the amount of compartments 30 that could be freed. In the embodiment as shown in Fig. 5, the parcel machine 20 can more or less immediately free three compartments. Accordingly, a message is sent to the administration server 50 ("F(3)"). Similarly, the parcel machine 20' can free 10 compartments in response to the campaign list CList update ("F',(10)"). Further compartments 30 of the parcel machine 20 can be freed after the courier has taken out items stored in the respective compartments. The respective message sent to the administration server 50 is referenced by "F"(5)" wherein five is the number of compartments that could be freed.

In an alternative embodiment, the parcel machines 20, 20' request the campaign list CList, e.g. on a regular basis (hourly). In yet another embodiment, the parcel machines 20, 20' request a campaign list update whenever a courier authenticates with the respective parcel machines 20, 20' such that occupied compartments 30 can be freed immediately.

Fig. 6 shows an activity diagram concerning the distribution of promotion messages Msg. The respective promotion messages Msg can be distributed by the administration server 50 using the SMS gateway 52. Other means might be available. Also, it is possible that the customer server 80 distributes the promotion messages Msg. In the embodiment of Fig. 6, a respective promotion message Msg is sent to the mobile phone 70 of a user. For this particular user, the administration server 50 might hold only telephone data. Such data could be stored in the user table 65 of Fig. 7. An example of a user entry with only a telephone number available is shown in the second row of the user table 65. The respective data set comprises an identifier (column name "ID", value 1) and a telephone number (column name "tel") with the number "12345". Accordingly, the administration server 50 can send the promotion message Msg to the mobile phone 70 per SMS. The message might contain content inviting the respective user to provide further information. More precisely, the promotion message Msg might invite the user to register with the administration server 50. As part of this registration process the user might have to provide a name and a location. The user table 65 shows an example of a user that has already registered with the administration server 50 in the third row. The respective user is named "Paul", has the telephone number 23451 and is located at position" X". Usually, the respective registration process also contains a promotion campaign identifier CID which enables the administration server 50 to find the promotion campaign associated with this registration and thus associated with the respective user. After receiving the registration data, the administration server 50 is able to determine a parcel machine 20, 20' which is located close to the location and has items associated with the promotion campaign having the promotion campaign identifier CID. The administration server 50 sends a pin code request Get(PIN) for a pin code PIN to that parcel machine 20 and receives in response the pin code PIN generated by the parcel machine 20. This pin code PIN is forwarded to the mobile phone 70 such that the respective user can authenticate with this pin code for receiving the item from the parcel machine 20.

The pin code PIN can be generated as a random number with a check sum and is stored in the promotion campaign table CompMap as shown in Fig. 9. According to this embodiment of the present invention, a pin code PIN is directly assigned to a compartment 30 of a particular parcel machine 20, 20'. However, there are alternative embodiments wherein the pin code PIN is directly associated with a promotion campaign and not with a compartment 30.

### Reference numerals

- 1: Internet
- 2: Promotion system
- 20, 20': Parcel machine
- 21: Input device
- 23: Output device (e.g. display)
- 25: Processing device
- 27: Communication device
- 28: Parcel machine memory
- 29: Card reader
- 30: Compartment
- 50: Administration server
- 52: SMS gateway
- 53: Server communication device
- 55: Server processing unit
- 57: Server memory
- 60: Central database
- 63: Promotion campaign table
- 65: User table
- 70: Mobile phone
- 80: Customer server (e.g. shop)
- 81: Customer server database
- CompID: Compartment identifier
- CompMap: Promotion compartment table
- CList: Campaign list update
- CID: Promotion campaign identifier
- F(3), F'(10), F"(5): Information message about freed compartments
- Get(PIN): Pin code request
- Msg: Promotion message
- PIN: Pin code
- R(30), R'(20): Reservation request
- Register(CID): Registration Request
- L(30),L'(20), L"(50): Loading confirmation

## Claims

1. Method for performing a promotion campaign, comprising the steps:
a) authenticating a courier by means of a parcel machine (20, 20');
b) receiving a selection from the courier, the selection selecting a target promotion campaign out of a list of promotion campaigns;
c) determining a set of reserved compartments (30) associated with the target promotion campaign;
d) determining a set of vacant compartments (30) of the parcel machine (20, 20');
e) matching the set of vacant compartments (30) with the set of reserved compartments (30) to determine a set of target compartments (30);
f) opening and/or unlocking the set of target compartments (30) of the parcel machine (20, 20') for loading items;
g) receiving data indicating that at least one of the target compartments (30) have been loaded;
h) storing association data associating the at least one of the target compartment (30) with the target campaign.

2. Method according to claim 1,
**characterized by**
- receiving, by a/the parcel machine (20, 20'), a reservation request from a server (50),
- reserving a number of compartments (30) in accordance with the reservation request by at least storing the number of reserved and/or not reserved compartments (30) per parcel machine (20, 20').

3. Method according to one of the preceding claims, in particular according to claim 2,
**characterized in that**
a/the reservation request comprises an indication of a particular promotion campaign, wherein the step of reserving a number of compartments (30) comprises:
storing the number of reserved compartments (30) and association data associating the number of reserved compartments (30) to the particular campaign.

4. Method according to one of the preceding claims,
**characterized by**
- receiving, by a parcel machine (20, 20'), status data from a server (50), the status data indicating that a particular campaign has been deactivated;
- identifying of the number of reserved compartments (30) associated to the particular campaign by the association data;
- freeing the number of reserved compartments (30), preferably by setting the status of the reserved compartments (30) from occupied to free.

5. Method according to one of the preceding claims,
**characterized in that**
the parcel machine (20, 20') comprises a plurality of compartments (30) of a first type, a plurality of compartments (30) of a second type and a plurality of compartments (30) of a third type, the compartments (30) of different types preferably differing in size and/or dimension,
the parcel machine (20, 20') maintaining at least one reservation data structure (CompMap) by storing per reservation:
- the number of reserved compartments (30) of a particular type;
- association data associating the number of reserved compartments to a particular campaign.

6. Method according to one of the preceding claims, in particular according to claim 5, **characterized by**
sending, by the parcel machine (20, 20'), a request for the status data, preferably after authenticating the courier.

7. Method according to one of the preceding claims, in particular according to claims 5 or 6, **characterized by**
- identifying a set of loaded compartments (30) containing items associated with promotion campaigns that have been deactivated;
- opening and/or unlocking the loaded compartments (30) after authenticating the courier.

8. Method according to one of the preceding claims, **characterized by**
- sending a plurality of (digital) promotion messages (Msg) containing a campaign identifier (CID) identifying a promotion campaign;
- receiving a plurality of registration requests, e.g. via a web server, the registration requests comprising at least one campaign identifier (CID) and a sender address;
- determining at least one compartment (30) and/or parcel machine (20, 20') storing an item associated with the campaign identifier (CID);
- sending an information message containing location data indicating the location of the compartment (30)/parcel machine (20, 20') to the sender.

9. Method according to one of the preceding claims, in particular according to claim 8, **characterized in that**
the registration requests comprise location data indicating a location, e.g. home address, company address, current location, associated with the senders, the method comprising the steps of:
- matching the location data of the sender with the location data of a plurality of parcel machine (20, 20') to determine at least one compartment (30) and/or parcel machine (20, 20') storing the items associated with the campaign identifier (CID).

10. Method according to one of the preceding claims, **characterized by**:
- generating a pin code (PIN);
- storing the pin code (PIN) in a pin code table for valid pin codes;
- assigning the pin code to a promotion campaign and/or a (target) compartment (30);
- sending a (digital) message containing the pin code (PIN);
- receiving a user input via a terminal;
- comparing the user input with the pin code table to determine whether the user input is a valid pin code;
- opening and/or unlocking a compartment (30) with an item associated with a promotion campaign, wherein the compartment is the compartment (30) to which the pin code (PIN) is assigned and/or the promotion campaign is the promotion campaign the pin code is assigned to.

11. Method according to one of the preceding claims,
**characterized in that**
the pin code (PIN) is generated in response to a/the registration request, preferably received via the web server.

12. Computer readable device with instructions adapted to cause a computer to implement the method of one of the preceding claims.

13. System (2), comprising:
- at least one server (30);
- a plurality of parcel machines (20, 20') communicatively connected to the server (30), wherein the parcel machines (20, 20') comprise:
- an authentication device (29) for authenticating a courier;
- an input device (21);
- a plurality of compartments (30) with actuators for locking and unlocking the compartments (30);
- a processing device (25), wherein the processing device (25) is programmed to implement the method according to one of the claims 1 to 11.

14. System (2) according to claim 13,
**characterized in that**
the plurality of parcel machines (20, 20') each comprise a promotion campaign table (63) storing a plurality of promotion campaigns and a campaign status associated with the respective promotion campaign, wherein the campaign status preferably indicates at last that a promotion campaign is active or inactive.

15. System (2) according to claim 13 or 14,
**characterized in that**
the plurality of parcel machines (20, 20') each comprise a promotion compartment table (CompMap) storing
a) a plurality of compartment identifiers;
b) optionally a campaign identifier (CID);
c) a compartment status for each of the compartments (30), wherein the compartment status preferably indicates at least one of the following status:
- vacant and not reserved;
- vacant and reserved;
- loaded with an item of a promotion campaign.
